# EUROPÄISCHE PATENTANMELDUNG

(11) **EP 1 998 005 A2**
(43) Veröffentlichungstag der Anmeldung: **03.12.2008**
(21) Anmeldenummer: 08156333.0
(22) Anmeldetag: 16.05.2008
(51) Int. Cl.: F01D 11/00, F01D 25/18

(54) **Ladeeinrichtung**

(30) Priorität: 30.05.2007 DE 102007025131
(71) Anmelder: Bosch Mahle Turbo Systems GmbH & Co. KG, 70376 Stuttgart (DE)
(72) Erfinder: Weisz, Rafael, 71334, Waiblingen (DE)
(74) Vertreter: Bongen, Renaud & Partner

(57) **Zusammenfassung**

Die vorliegende Erfindung betrifft eine Ladeeinrichtung (1), insbesondere ein Abgasturbolader für ein Kraftfahrzeug, mit einer in einem Gehäuse (2) gelagerten Welle (3), die turbinenseitig (5) ein Turbinenrad (6) und verdichterseitig (7) ein Verdichterrad (8) trägt, wobei die Welle (3) auf der Verdichter- und/oder auf der Turbinenseite (7, 5) direkt oder indirekt über ein jeweils drehfest mit der Welle (3) verbundenes Hülsenelement (9, 9') am Gehäuse (2) gelagert ist, wobei die Lagerung über jeweils zwei axial zueinander beabstandete Lagerringe (10a, b, 10c, d) erfolgt, die zwischen dem Gehäuse (2) und der Welle (3) oder zwischen dem Gehäuse (2) und dem Hülsenelement (9, 9') angeordnet sind, wobei ein in Axialrichtung zwischen den jeweils zwei Lagerringen (10a, b, 10c, d) liegender Ringraum (11a, 11b), der in Umfangsrichtung von der Welle (3) oder dem Hülsenelement (9, 9') einerseits und dem Gehäuse (2) andererseits begrenzt wird, mit einem drucklosen Raum (12), insbesondere mit einem drucklosen Ölsammelraum (12) verbunden ist.

## Beschreibung

Die vorliegende Erfindung betrifft eine Ladeeinrichtung, insbesondere einen Abgasturbolader für ein Kraftfahrzeug.

Derartige Abgasturbolader dienen der Leistungssteigerung von Kolbenmotoren, indem sie einen Luftmengen- und Kraftstoffdurchsatz pro Arbeitstakt erhöhen. Bei nicht aufgeladenen Kolbenmotoren, sogenannten Saugmotoren, wird beim Ansaugen von Luft durch die Kolben ein Unterdruck im Ansaugtrakt erzeugt, der mit wachsender Drehzahl ansteigt und dadurch die erreichbare Leistung des Motors begrenzt. Dem wirkt der Turbolader durch eine Erhöhung des Drucks im Ansaugtrakt des Motors entgegen, so dass während des Ansaugtaktes eine grö-ßere Menge Luft in den Zylinder gelangt als bei einem Saugmotor und dadurch mehr Sauerstoff zur Verbrennung einer entsprechend größeren Kraftstoffmenge zur Verfügung steht. Im Turbolader selbst ist eine drehbar gelagerte Welle angeordnet, welche einenends ein Verdichterrad und anderenends ein Turbinenrad aufweist. Durch die während des Betriebs des Abgasturboladers erreichbaren, extrem hohen Drehzahlen der Welle, muss diese ausreichend geschmiert werden, um einen schnellen Verschleiß zu unterbinden. Zu vermeiden ist dabei jedoch, dass das Schmieröl an der Turbinenseite des Abgasturboladers in den Abgastrakt austritt und dort aufgrund der dort herrschenden hohen Temperaturen verbrennt beziehungsweise verkokt.

Die vorliegende Erfindung beschäftigt sich mit dem Problem, eine verbesserte Ausführungsform für eine Ladeeinrichtung anzugeben, bei welcher insbesondere ein Austritt von Schmieröl auf die Turbinenseite der Ladeeinrichtung zuverlässig vermieden werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, eine Welle der Ladeeinrichtung, welche turbinenseitig ein Turbinenrad und verdichterseitig ein Verdichterrad trägt, zumindest an einer Seite über eine jeweils zwei axial zueinander beabstandete Lagerringe aufweisende Lagerung am Gehäuse zu lagern und einen in Axialrichtung zwischen den jeweiligen beiden Lagerringen liegenden Ringraum mit einem drucklosen Raum kommunizierend zu verbinden. Bei dem drucklosen Raum handelt es sich vorzugsweise um einen drucklosen Ölsammelraum. Durch die erfindungsgemäße Verbindung zwischen dem Ringraum einerseits und dem drucklosen Ölsammelraum andererseits kann Öl, welches aufgrund einer Pumpwirkung eines inneren Lagerringes in den Ringraum gelangt ist, von dort aus problemlos in den drucklosen Raum, insbesondere den Ölsammelraum, abfließen. Da sich in dem zwischen den beiden Lagerringen liegenden Ringraum kein erhöhter Druck aufbauen kann, ist ein Weitertransport des Öles, welches üblicherweise von einer Schmierung eines hydrodynamischen Gleitlagers stammt, über den äußeren Lagerring auf die Turbinen- oder Verdichterseite nicht mehr möglich. Zudem herrscht zumindest auf der Turbinenseite ein im Vergleich zum Ringraum deutlich erhöhter Druck, so dass ein Weitertransport des im Ringraum angelangenden Schmieröles entgegen einem Druckgefälle über den äußeren Lagerring auf die Turbinen- beziehungsweise Verdichterseite erfolgen müsste, was physikalisch nahezu unmöglich ist. Durch die Verbindung zwischen dem Ringraum und dem drucklosen Ölsammelraum wird somit ein Austritt von Schmieröl sowohl auf der Verdichterseite als auch auf der Turbinenseite der Ladeeinrichtung zuverlässig unterbunden, wodurch ein Verbrennen des austretenden Öls zumindest auf der Turbinenseite und dadurch eine erhöhte Verschleißanfälligkeit der Ladeeinrichtung wirkungsvoll verhindert werden können. Insbesondere erfolgt auch keine Verkokung des austretenden Öls, wodurch die Haltbarkeit der Ladeeinrichtung deutlich reduziert werden könnte.

Bei einer weiteren vorteilhaften Ausführungsform ist die Welle über ein weiteres, axial zwischen den beiden Lagerungen angeordnetes und als hydrodynamisches Gleitlager ausgebildetes Lager am Gehäuse gelagert. Ein derartiges hydrodynamisches Gleitlager bildet im Betrieb der Ladeeinrichtung einen Schmierfilm aus Schmierstoff, insbesondere aus Schmieröl, zwischen der Welle einerseits und einer diese umgebenden Hülse andererseits, wodurch die Welle ohne direkten Kontakt zur Hülse in dieser gleitet. Hierdurch lässt sich insbesondere ein verschleißfreier Dauerbetrieb auch bei hohen Belastungen und hohen Drehzahlen, wie sie bei Abgasturboladern üblich sind, realisieren.

Zweckmäßig ist der in Axialrichtung zwischen den jeweils zwei Lagerringen liegende Ringraum durch eine ringförmige Ausnehmung im Gehäuse zumindest teilweise gebildet. Hierdurch lässt sich ein Querschnitt des Ringraumes an einen erforderlichen Bedarf leicht anpassen, so dass bei inneren Lagerringen, welche einen erhöhten Volumenstrom an Schmierstoff in den Ringraum befördern, mit einer größeren gehäuseseitigen Ausnehmung ein größerer Ringraumquerschnitt vorgesehen werden kann als bei inneren Lagerringen mit einem kleineren Volumenstrom an Schmierstoff. Die ringförmige Ausnehmung kann dabei bereits in einer Herstellungsform, insbesondere einer Gussform, vorgesehen werden und ist dadurch kostengünstig und einfach herzustellen.

Bei einer weiteren vorteilhaften Ausführungsform der erfindungsgemäßen Lösung ist der in Axialrichtung zwischen den jeweils zwei Lagerringen liegende Ringraum in einem Tiefpunktbereich über eine Gehäusebohrung mit dem Ölsammelraum verbunden. Hierdurch wird erreicht, dass das über den inneren Lagerring in den Ringraum eindringende Schmieröl zuverlässig in den drucklosen Raum, insbesondere in den drucklosen Ölsammelraum abgeleitet werden kann und im Ringraum selbst kein Schmiermittelsumpf entsteht, welcher bei entsprechender Höhe die Abführung von in den Ringraum austretendem Schmieröl zumindest erschweren und im schlechtesten Falle verhindern könnte. Denkbar sind hierbei selbstverständlich auch weitere Verbindungspfade zwischen dem Ringraum und dem drucklosen Raum, wodurch ein Abfluss von in den Ringraum austretendem Schmieröl weiter begünstigt werden kann.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

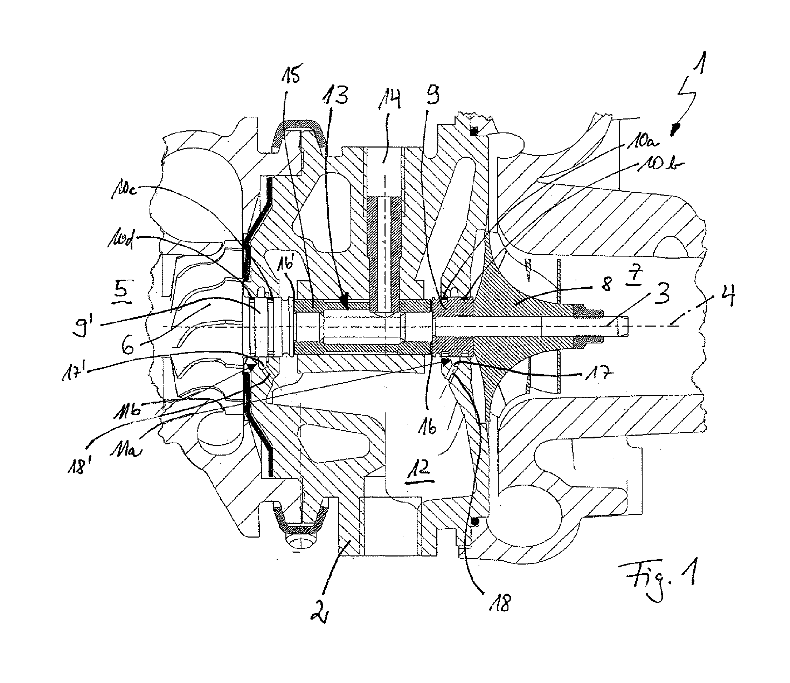

Die einzige Fig. 1 zeigt eine Schnittdarstellung durch eine erfindungsgemäße Ladeeinrichtung.

Entsprechend Fig. 1 weist eine erfindungsgemäße Ladeeinrichtung 1, welche insbesondere als Abgasturbolader für ein nicht dargestelltes Kraftfahrzeug ausgebildet sein kann, ein Gehäuse 2 mit einer darin drehbar angeordneten Welle 3 auf. Die Welle 3 ist dabei um eine Rotationsachse 4 drehbar gelagert. Auf einer Turbinenseite 5 ist an der Welle 3 ein Turbinenrad 6 angeordnet, während die Welle 3 auf der Verdichterseite 7 ein Verdichterrad 8 trägt. Das Turbinenrad 6 wird von einem Abgasstrom des mit der erfindungsgemäßen Ladeeinrichtung 1 ausgerüsteten Verbrennungsmotors angetrieben, wobei die Drehbewegung über die Welle 3 auf das Verdichterrad 8 übertragen wird, welche die der Verbrennung im Verbrennungsmotor zugeführte Luft verdichtet.

Die Welle 3 ist gemäß der Fig. 1 auf der Verdichterseite 7 und auf der Turbinenseite 5 drehbar am Gehäuse 2 gelagert, wobei die Lagerung der Welle 3 entweder direkt (nicht gezeigt) oder indirekt über ein jeweils drehfest mit der Welle verbundenes Hülsenelement 9 beziehungsweise 9' erfolgen kann. Die Lagerung erfolgt über jeweils zwei axial zueinander beabstandete Lagerringe 10a und 10b auf der Verdichterseite 7 sowie 10c und 10d auf der Turbinenseite 5. Die Lagerringe 10 sind dabei zwischen dem Gehäuse 2 und dem Hülsenelement 9 beziehungsweise 9' oder in einem nicht gezeigten Ausführungsbeispiel zwischen dem Gehäuse 2 und der Welle 3 selbst angeordnet. Denkbar ist hierbei auch, dass die erfindungsgemäße Lagerung entweder auf der Verdichterseite 7 oder auf der Turbinenseite 5 angeordnet ist.

In Axialrichtung zwischen den beiden Lagerringen 10a und 10b beziehungsweise 10c und 10d ist jeweils ein Ringraum 11a beziehungsweise 11b angeordnet, der in Umfangsrichtung von der Welle 3 oder dem Hülsenelement 9, 9' einerseits und dem Gehäuse 2 andererseits begrenzt wird. Erfindungsgemäß ist dabei sowohl der Ringraum 11a als auch der Ringraum 11b mit einem drucklosen Raum 12, welcher in dem gezeigten Fall als druckloser Ölsammelraum 12 ausgebildet ist, verbunden.

Die Lagerringe 10 sind üblicherweise als Kolbenringe ausgebildet, wobei zwischen den beiden Lagerungen die Welle 3 über ein weiteres, insbesondere als hydrodynamisches Gleitlager ausgebildetes Lager 13 am Gehäuse 2 gelagert ist. Dieses, als in dem gezeigten Ausführungsbeispiel gemäß der Fig. 1 als hydrodynamisches Gleitlager ausgebildete weitere Lager 13 wird über eine Ölzuführung 14 mit Schmieröl versorgt, wobei das Schmieröl, respektive ein Schmierstoff, zwischen der Welle 3 und einer Hülse 15 in Axialrichtung der Welle 3 transportiert wird. Ein jeweiliges axiales Ende der Hülse 15 beziehungsweise des weiteren Lagers 13 ist dabei mit einem Axialspalt 16 zum jeweils benachbarten Hülsenelement 9, 9' der Verdichterseite 7 beziehungsweise der Turbinenseite 5 zugeordnet. Dieser Axialspalt 16 verbindet den drucklosen Raum 12 mit einer Ölschmierung des Lagers 13, insbesondere des hydrodynamischen Gleitlagers, und ermöglicht dadurch ein radiales Austreten von aus der Ölschmierung des weiteren Lagers 13 stammendem Schmieröl in den Ölsammelraum 12 beziehungsweise den drucklosen Raum 12.

Wie der Fig. 1 weiter zu entnehmen ist, ist der in Axialrichtung zwischen den jeweils zwei Lagerringen 10a und 10b beziehungsweise 10c und 10d liegende Ringraum 11a beziehungsweise 11b durch eine ringförmige Ausnehmung im Gehäuse 2 gebildet.

In einem jeweiligen Tiefpunktbereich 17, 17' ist der jeweilige Ringraum 11a, 11b über eine Verbindung, insbesondere eine Gehäusebohrung 18, 18' mit dem Raum 12, insbesondere mit dem Ölsammelraum 12 verbunden. Hierdurch kann gewährleistet werden, dass sich in den Ringräumen 11a, 11b kein Schmierölsumpf bildet, sondern dass sich das dort niederschlagende Öl stets zuverlässig abgeführt wird. Generell kann dabei optional in zumindest einem der Ringräume 11a, 11b eine nicht gezeigte und in der Art einer Prallwand ausgebildete Trennwand vorgesehen sein.

Durch die erfindungsgemäße Verbindung 18, 18' zwischen dem jeweiligen Ringraum 11a, 11b und dem drucklosen Raum 12 wird Öl, das aufgrund einer Pumpwirkung des inneren Lagerrings 10a, 10c in den Ringraum 11a, 11b gepumpt wird, in diesem gesammelt und von diesem in den drucklosen Raum 12 abgeführt. Ein Weitertransport über den jeweils äußeren Lagerring 10b, 10d auf die Verdichterseite 7 beziehungsweise die Turbinenseite 5 wird insbesondere auch dadurch unterbunden, dass der jeweilige Ringraum 11a, 11b drucklos ist und ein Druck auf der Verdichterseite 7 beziehungsweise auf der Turbinenseite 5 größer ist als in den zugehörigen Ringräumen 11a, 11b, wodurch stets ein Druckgefälle von der Verdichterseite 7 zum Ringraum 11a beziehungsweise ein Druckgefälle von der Turbinenseite 5 zum Ringraum 11b vorhanden ist. Ein Öltransport entgegen diesem jeweiligen Druckgefälle ist aus physikalischen Gründen nahezu unmöglich, so dass ein Ölaustritt sowohl auf der Verdichterseite 7 als auch auf der Turbinenseite 5 zuverlässig unterbunden und dadurch die Haltbarkeit der erfindungsgemäßen Ladeeinrichtung 1 deutlich verbessert werden kann.

## Patentansprüche

1. Ladeeinrichtung (1), insbesondere ein Abgasturbolader für ein Kraftfahrzeug,
- mit einer in einem Gehäuse (2) gelagerten Welle (3), die turbinenseitig (5) ein Turbinenrad (6) und verdichterseitig (7) ein Verdichterrad (8) trägt,
- wobei die Welle (3) auf der Verdichter- und/oder auf der Turbinenseite (7, 5) direkt oder indirekt über ein Hülsenelement (9, 9') am Gehäuse (2) gelagert ist,
- wobei die Lagerung über jeweils zwei axial zueinander beabstandete Lagerringe (10a, b, 10c, d) erfolgt, die zwischen dem Gehäuse (2) und der Welle (3) oder zwischen dem Gehäuse (2) und dem Hülsenelement (9, 9') angeordnet sind,
- wobei ein in Axialrichtung zwischen den jeweils zwei Lagerringen (10a, b, 10c, d) liegender Ringraum (11a, 11b), der in Umfangsrichtung von der Welle (3) oder dem Hülsenelement (9, 9') einerseits und dem Gehäuse (2) andererseits begrenzt wird, mit einem drucklosen Raum (12), insbesondere mit einem drucklosen Ölsammelraum (12) verbunden ist.

2. Ladeeinrichtung nach Anspruch 1,
**dadurch gekennzeichnet,**
**dass** zumindest ein Lagerring (10a, 10b, 10c, 10d) als Kolbenring ausgebildet ist.

3. Ladeeinrichtung nach Anspruch 1 oder 2,
**dadurch gekennzeichnet,**
**dass** die Welle (3) über ein weiteres, axial zwischen den beiden Lagerungen angeordnetes Lager (13) am Gehäuse (2) gelagert ist.

4. Ladeeinrichtung nach Anspruch 3,
**dadurch gekennzeichnet,**
**dass** das weitere Lager (13) als hydrodynamisches Gleitlager ausgebildet ist.

5. Ladeeinrichtung nach Anspruch 3 oder 4,
**dadurch gekennzeichnet,**
**dass** ein jeweiliges axiales Ende des weiteren Lagers (13) mit einem Axialspalt (16, 16') zum jeweils benachbarten Hülsenelement (9, 9') der Turbinenseite (5) oder der Verdichterseite (7) angeordnet ist.

6. Ladeeinrichtung nach Anspruch 5,
**dadurch gekennzeichnet,**
**dass** der Axialspalt (16, 16') den drucklosen Raum (12) mit einer Ölschmierung des weiteren Lagers (13), insbesondere des hydrodynamischen Gleitlagers, verbindet und dadurch ein radiales Austreten von aus der Ölschmierung des weiteren Lagers (13) stammendem Schmieröl in den Raum (12), insbesondere in den Ölsammelraum (12) ermöglicht.

7. Ladeeinrichtung nach einem der Ansprüche 1 bis 6,
**dadurch gekennzeichnet,**
**dass** der in Axialrichtung zwischen den jeweils zwei Lagerringen (10a, 10b, 10c, 10d) liegende Ringraum (11a, 11b) durch eine ringförmige Ausnehmung im Gehäuse gebildet ist.

8. Ladeeinrichtung nach einem der Ansprüche 1 bis 7,
**dadurch gekennzeichnet,**
**dass** der Ringraum (11a, 11b) in einem Tiefpunktbereich (17, 17') über eine Gehäusebohrung (18, 18') mit dem drucklosen Raum (12) verbunden ist.

9. Ladeeinrichtung nach einem der Ansprüche 1 bis 8,
**dadurch gekennzeichnet,**
**dass** ein Druck am Verdichterrad (8) und/oder am Turbinenrad (6) größer ist als im jeweils benachbart dazu liegenden Ringraum (11a, 11b).

10. Ladeeinrichtung nach einem der Ansprüche 1 bis 9,
**dadurch gekennzeichnet,**
**dass** in zumindest einem Ringraum (11a, 11b) eine in der Art einer Prallwand ausgebildete Trennwand vorgesehen ist.
